# EUROPÄISCHE PATENTSCHRIFT

(11) **EP 2 412 561 B1**
(45) Veröffentlichungstag und Bekanntmachung des Hinweises auf die Patenterteilung: **09.09.2020**
(21) Anmeldenummer: 11175753.0
(22) Anmeldetag: 28.07.2011
(51) Int. Cl.: B60L 53/16, B60L 53/31, B60L 53/65, B60L 3/12, B60L 3/00

(54) **Verfahren zur Bereitstellung eines Zugangs zu einem Steckelement**
Method for providing access to a plug element
Procédé de préparation d'un accès à un élément d'enfichage

(30) Priorität: 30.07.2010 DE 102010038683
(43) Veröffentlichungstag der Anmeldung: 01.02.2012
(73) Patentinhaber: Compleo Charging Solutions GmbH, 44536 Lünen (DE)
(72) Erfinder: Kachouh, Checrallah, 44227 Dortmund (DE)
(74) Vertreter: Wickord, Wiro

(56) Entgegenhaltungen:
- DE-A1- 10 032 093
- DE-A1-102009 006 982
- US-A1- 2010 013 434

## Beschreibung

Die Erfindung betrifft ein Verfahren zur Bereitstellung eines Zugangs zu einem Steckelement nach dem Oberbegriff des Patentanspruchs 1.

Zunehmend Verbreitung finden sogenannte Ladestationen bzw. E-Tankstellen zur Bereitstellung elektrischer Energie für elektrisch betreibbare Fahrzeuge. Sie sind beispielsweise auf einem Privatgrundstück - etwa in der heimischen Garage - oder an öffentlich zugänglichen Orten, beispielsweise auf Parkplätzen, in Einkaufszentren oder entlang eines zum Parken freigegebenen Seitenstreifens eines Verkehrswegs angeordnet. Da das Laden elektrisch betreibbarer Fahrzeuge mit elektrischer Energie deutlich länger dauert als das Betanken eines konventionellen Fahrzeugs, wird das elektrisch betreibbare Fahrzeug über einen längeren Zeitraum, beispielsweise über Nacht, zur Aufladung der Fahrzeugbatterie mit der Ladestation verbunden. Ladestation und Elektrofahrzeug weisen hierzu jeweils ein Steckelement, typischerweise eine Steckdose, auf und werden für den Ladevorgang über ein beidseits mit einem Gegensteckelement, typischerweise einem mit einem Stecker ausgestatteten Ladekabel, elektrisch verbunden. Während des Ladevorgangs sind das Fahrzeug und die Ladestation in der Regel unbeaufsichtigt.

Um insbesondere bei Nichtbenutzung der Ladesäule auf Unachtsamkeit bzw. Unwissenheit zurückgehende Gefahren von Menschen und Tiere, insbesondere von Kindern, abzuhalten, ist das Steckelement der Ladesäule bei Nichtverwendung derselben üblicherweise hinter einem Verschlusselement verdeckt in der Ladestation angeordnet. Als Verschlusselement weist die Ladestation beispielsweise eine manuell betätigbare Klappe auf, die das Steckelement bei Nichtverwendung der Ladesäule abdeckt. Zum Einsetzen des Gegensteckelements in das Steckelement der Ladesäule kann das Verschlusselement aufgeklappt oder zur Seite gedreht werden. Nachteilig hierbei ist, dass die Betätigung des Verschlusselements für jedermann möglich ist und die Steckdose allenfalls gegen Unachtsamkeit, beispielsweise unbeabsichtigtes Hineingreifen, gesichert ist. Ein Schutz gegen Vandalismus oder Missbrauch wird jedoch ebenso wenig erreicht wie eine Absicherung der Steckdose gegen neugierige Kinder. Ebenso erfordert die manuelle Betätigung des Verschlusselements und das Einsetzen des Gegensteckelements in das Steckelement eine wenig komfortable Zweihandbedienung, bei der mit der einen Hand das Verschlusselement geöffnet und mit der anderen Hand das Gegensteckelement in das Steckelement eingeführt wird.

Ferner ist bekannt, die Steckdose hinter einer verriegelbaren Klappe anzuordnen, die nur durch einen autorisierten Nutzer der Ladestation entriegelt und geöffnet werden kann. Diese Variante stellt sicher, dass die Steckdose bei Nichtverwendung derselben für Kinder unzugänglich in der Ladestation angeordnet und gegen Vandalismus bzw. Missbrauch geschützt ist. Jedoch besteht auch hier das Problem, dass zum Einsetzen des Gegensteckelement in das Steckelement der Ladestation eine Zweihandbedienung erforderlich ist. Zudem wird die Klappe erst entriegelt, nachdem der Benutzer autorisiert, das heißt identifiziert und als zur Durchführung des Ladevorgangs berechtigt erkannt wurde. Der Autorisierungsvorgang kann vergleichsweise lange dauern. Dies ist insbesondere dann der Fall, wenn die für den Autorisierungsvorgang notwendigen Vergleichsdaten nicht in der Ladestation selbst, sondern in einer ortsfernen Zentraldatenbank eines Ladestationenbetreibers abgespeichert sind. Während des Autorisierungsvorgangs kann das Gegensteckelement (Ladekabel) nicht in das Steckelement der Ladestation eingeführt werden.

Eine Ladestation mit einer verriegelbaren Klappe für das Steckelement ist beispielsweise aus der US 2010/0013434 A1 bekannt. Die Klappe wird erst entriegelt beziehungsweise das Steckelement bereitgestellt, nachdem die Identifikation des Nutzers abgeschlossen ist.

Ferner ist eine Identifikationsroutine für eine Ladestation aus der DE 100 32 093 A1 bekannt.

Aufgabe der vorliegenden Erfindung ist es daher, ein Verfahren zur Bereitstellung eines Zugangs zu dem Steckelement der Ladestation derart weiterzubilden, dass der Bedienkomfort verbessert und das Steckelement der Ladestation schneller als bisher zur Verfügung gestellt werden.

Zur Lösung der Aufgabe weist die Erfindung die Merkmale des Patentanspruchs 1 auf.

Der besondere Vorteil der Erfindung besteht darin, dass ein Steckelement einer Ladestation zum einen in einer Nichtbereitstellungsposition des Steckelements unzugänglich in einem Gehäuse der Ladestation angeordnet und so vor Vandalismus, Missbrauch und unbeabsichtigte Berührung geschützt ist. Zum anderen kann ein Zugang zu dem Steckelement sehr schnell bereitgestellt werden, indem auf die vollständige Authentifizierung des Benutzers verzichtet wird. Das Steckelement wird in die Bereitstellungsposition verbracht, sobald der Benutzer anhand der Identifikationsinformation eindeutig identifiziert ist. Es ist demgegenüber für die Bereitstellung des Steckelements nicht erforderlich, dass die Berechtigung des Benutzers zur Durchführung des Ladevorgangs vorliegt. Die Berechtigungsanfrage kann nach der Bereitstellung des Steckelements bzw. parallel hierzu in einer Hintergrundroutine verifiziert werden.

Um das Steckelement aus der Nichtbereitstellungsposition in die Bereitstellungsposition und zurück zu verbringen, kann dieses beispielsweise bewegbar in der Ladestation angeordnet sein und mittels einer Betätigungseinheit (z. B. elektromotorisch) entlang einer mechanischen Führung verschoben werden. Ebenso kann das Steckelement in der Nichtbereitstellungsposition von einem verriegelten Verschlusselement abgedeckt werden, welches zur Bereitstellung des Steckelements entriegelt und/oder geöffnet wird, so dass das Steckelement zugänglich in der Ladestation angeordnet ist.

Nach einer bevorzugten Ausführungsform der Erfindung wird die Identifikationsinformation nach dem Erfassen in einem der Ladestation zugeordneten Datenspeicher zumindest temporär gespeichert. Vorteilhaft erhöht sich hierdurch der Schutz gegen Missbrauch, Manipulation und Vandalismus, da der Benutzer, der das Steckelement hat bereitstellen lassen, zu einem späteren Zeitpunkt anhand der Identifikationsinformation identifiziert werden kann.

Nach einer Weiterbildung der Erfindung wird die in dem Datenspeicherelement gespeicherte Identifikationsinformation nach Ablauf eines vorbestimmten Zeitintervalls, nach der Durchführung einer Funktionsfähigkeitsüberprüfung, nach der Beendigung des Ladevorgangs bzw. unmittelbar vor dem Erfassen einer Identifikationsinformation eines nächsten Benutzers aus dem Datenspeicherelement gelöscht. Vorteilhaft wird hierdurch in Übereinstimmung mit den Datenschutzbestimmungen gewährleistet, dass die Identifikationsinformation nicht dauerhaft gespeichert und selbsttätig gelöscht wird. Das Löschen der gespeicherten Identifikationsinformation erfolgt, sobald sichergestellt ist, dass der Ladevorgang regulär durchgeführt und es zu keinem Missbrauch bzw. zu keiner Manipulation gekommen ist. Kann demgegenüber infolge von Vandalismus ein nächster Ladevorgang nicht gestartet werden oder wird eine Missbrauch der Ladestation erkannt, bleibt die Identifikationsinformation des letzten Benutzers in dem Datenspeicherelement hinterlegt, bis die Ladestation instandgesetzt bzw. die Identifikationsinformation des letzten Benutzers zum Zwecke der Aufklärung des Geschehens und der Identifikation des Benutzers gesichert ist. Die Funktionsfähigkeitsprüfung der Ladestation kann beispielsweise durchgeführt werden, unmittelbar bevor, während oder nachdem das Steckelement von der Bereitstellungsposition in die Nichtbereitstellungsposition verbracht wird bzw. wurde. Die Funktionsfähigkeit der Ladestation kann unabhängig davon durchgeführt werden, ob nach der Bereitstellung des Steckelements ein Ladevorgang durchgeführt wurde.

Nach einer Weiterbildung der Erfindung wird die Identifikationsinformation anhand von Sicherheitsmerkmalen auf ihre Echtheit geprüft, bevor das Steckelement in die Bereitstellungsposition verbracht wird. Vorteilhaft verbessert sich hierdurch der Schutz vor Vandalismus, Missbrauch und Manipulation. Die Echtheit kann hierbei beispielsweise anhand von gemeinsam mit der Identifikationsinformation gespeicherten Sicherheitsmerkmalen geprüft werden.

Nach der Erfindung wird nach der Bereitstellung des Steckelements in der Bereitstellungsposition eine weitere Identifikationsinformation an die Ladestation übertragen. Anhand der weiteren Identifikationsinformation wird die Berechtigung des Benutzers zur Durchführung des Ladevorgangs verifiziert bzw. ein dem Benutzer zugeordnetes Abrechnungskonto bestimmt. Vorteilhaft wird durch die der Bereitstellung des Steckelements nachgelagerte Übertragung der weiteren Identifikationsinformation die Möglichkeit geschaffen, die Berechtigungsprüfung zu einem Zeitpunkt durchzuführen, an dem das Fahrzeug über das Ladekabel mit der Ladestation verbunden ist. Hierdurch kann die weitere Identifikationsinformation im Fahrzeug abgespeichert und von dort an die Ladestation übertragen werden. Dies bietet die Möglichkeit, die weitere Identifikationsinformation in besonderer Weise gegen Manipulation zu schützen mit der Folge, dass die Berechtigungsprüfung anhand eines wesentlich strengeren Maßstabs erfolgen kann als die Identifikation des Benutzers, die Voraussetzung für die Bereitstellung des Steckelements in der Bereitstellungsposition ist.

Nach einer Weiterbildung der Erfindung wird eine Identifikationsinformation aufweisender Informationsträger zum Erfassen der Identifikationsinformation in eine als Informationserfassungseinheit dienende Kartenleseeinheit eingeführt bzw. an eine von außen zugängliche Anlagefläche der Informationserfassungseinheit angelegt. Vorteilhaft ergibt sich hierdurch eine besonders günstige und in der Praxis vielfach erprobte Lösung. Der Benutzer ist beispielsweise durch die Handhabung von Geldautomaten, Bezahlstationen oder Self-Check-In-Terminals an Flughäfen an Handhabung und Funktion der Informationserfassungseinheit gewöhnt.

Nach einer Weiterbildung der Erfindung dient ein Ausweisdokument, welches von einer Vielzahl der Benutzer mitgeführt, als Informationsträger. Vorteilhaft wird hierdurch ein offenen System geschaffen, welches unabhängig einer Registrierung beim Ladestationenbetreiber bzw. dem vorhalten einer Kundenkarte von nahezu jedermann benutzt werden kann. Als Ausweisdokument können beispielsweise ein Führerschein, ein Personalausweis, ein Reisepass, eine Kreditkarte, eine sonstige Bankkarte und/oder eine Gesundheitskarte dienen.

Optional kann die Bereitstellung des Steckelements an das Vorliegen bestimmter persönlicher Eigenschaften des Benutzers, insbesondere an ein Mindestalter (beispielsweise Volljährigkeit), geknüpft werden. Die persönlichen Eigenschaften des Benutzers werden aus der Identifikationsinformation des Benutzers oder aus dem Ausweisdokument selbst von der Informationserfassungseinheit erfasst. Die weitere Identifikationsinformation, die beispielsweise von dem Fahrzeug an die Ladestation übertragen wird, kann hierbei unabhängig von der Person des Benutzers beispielsweise dem Fahrzeughalter (Privatperson, Autovermietung oder ähnliches) zugeordnet sein. Eine vorherige Registrierung beim Ladestationenbetreiber ist hierbei lediglich für den Erhalt der weiteren Identifikationsinformation erforderlich.

Nach einer Weiterbildung der Erfindung wird die Identifikationsinformation von der Informationserfassungseinheit optisch oder elektrisch und/oder magnetisch und/oder berührungslos über eine Funkstrecke erfasst. Hierzu ist die Informationserfassungseinheit beispielsweise als eine Scanneinheit zum optischen Erfassen der Identifikationsinformation ausgebildet. Der die Identifikationsinformation aufweisende Informationsträger wird in diesem Fall vorteilhaft an die von außen zugängliche Anlagefläche der Scanneinheit angelegt. Zum magnetischen bzw. elektrischen Erfassen der Identifikationsinformation kann die Informationserfassungseinheit ebenfalls über eine Anlagefläche zum Anlegen des Informationsträgers verfügen. Ferner kann die Informationserfassungseinheit als Kartenleseeinheit ausgeführt werden, die einen Einführungsschlitz zum zumindest teilweisen Einführen des Informationsträgers in die Kartenleseeinheit aufweist. Die auf einem Magnetstreifen bzw. einem Datenchip gespeicherte Identifikationsinformation wird dann von der Kartenleseeinheit ausgelesen. Ebenso ist es möglich, die Identifikationsinformation berührungslos, beispielsweise mittels RFID-Transpondertechnologie oder via Mobiltelefon, an die Informationserfassungseinheit zu übertragen. Die Identifikationsinformation kann hierbei beispielsweise von dem Mobiltelefon an die Informationserfassungseinheit gesendet werden. Als Identifikationsinformation kann in diesem Fall beispielsweise ein per SMS übersandter Code oder die Mobiltelefonnummer selbst dienen. Ebenfalls kann - etwa bei der RFID-Technologie - ein von der Ladestation ausgesandtes Trägersignal moduliert und das modulierte Signal von der Informationserfassungseinheit empfangen und zum Erfassen der Identifikationsinformation ausgewertet werden. Beispielsweise kann das auszulesende RFID-Tag in dem Mobiltelefon angeordnet sein (NFC: near field communication) .

## Patentansprüche

1. Verfahren zur Bereitstellung eines Zugangs zu einem Steckelement, welches in einer elektrische Energie für elektrisch betreibbare Fahrzeuge bereitstellenden Ladestation integriert ist, wobei
- eine Identifikationsinformation eines Benutzers von einer der Ladestation zugeordneten Informationserfassungseinheit erfasst wird und
- das Steckelement nach dem Erfassen der Identifikationsinformation aus einer Nichtbereitstellungsposition, in der die Steckdose unzugänglich in einem Gehäuse der Ladestation angeordnet ist, in eine Bereitstellungsposition verbracht wird, in der das Steckelement von außen zugänglich in dem Gehäuse angeordnet ist und ein Gegensteckelement in das Steckelement einsetzbar ist,
**dadurch gekennzeichnet, dass** nach der Bereitstellung des Steckelements in der Bereitstellungsposition eine weitere Identifikationsinformation an eine Steuereinheit der Ladestation übertragen wird, mittels derer die Berechtigung des Benutzers zur Durchführung des Ladevorgangs verifiziert und/oder ein dem Benutzer zugeordnetes Abrechnungskonto bestimmt werden.

2. Verfahren nach Anspruch 1, **dadurch gekennzeichnet, dass** die Identifikationsinformation nach dem Erfassen in einem der Ladestation zugeordneten Datenspeicherelement zumindest temporär gespeichert wird.

3. Verfahren nach Anspruch 1 oder 2, **dadurch gekennzeichnet, dass** in dem Datenspeicherelement gespeicherte Identifikationsinformationen nach Ablauf eines vorbestimmten Zeitintervalls und/oder nach Durchführung einer Funktionsfähigkeitsprüfung und/oder nach der erfolgreichen Beendigung des Ladevorgangs und/oder beim Erfassen einer Identifikationsinformation eines nächsten Benutzers aus dem Datenspeicherelement gelöscht werden.

4. Verfahren nach einem der Ansprüche 1 bis 3, **dadurch gekennzeichnet, dass** die Identifikationsinformation anhand von Sicherheitsmerkmalen auf ihre Echtheit geprüft wird, bevor das Steckelement in die Bereitstellungsposition verbracht wird.

5. Verfahren nach einem der Ansprüche 1 bis 4, **dadurch gekennzeichnet, dass** eine Identifikationsinformation aufweisender Informationsträger zum Erfassen der Identifikationsinformation in ein als Informationserfassungseinheit dienende Kartenleseeinheit eingeführt oder an eine von außen zugängliche Anlagefläche der Informationserfassungseinheit angelegt wird.

6. Verfahren nach einem der Ansprüche 1 bis 5, **dadurch gekennzeichnet, dass** die Identifikationsinformation von einem als Informationsträger dienenden, von einer Vielzahl von Benutzern mitgeführten Ausweisdokument erfasst wird.

7. Verfahren nach einem der Ansprüche 1 bis 6, **dadurch gekennzeichnet, dass** die Identifikationsinformationen von der Informationserfassungseinheit optisch und/oder elektrisch und/oder magnetisch und/oder berührungslos über eine Funkstrecke erfasst werden.

## Claims

1. Method for providing access to a plug element which is integrated into a charging station that provides electrical energy for electrically drivable vehicles, wherein
- identification information of a user is captured by an information capturing unit assigned to the charging station and
- after capturing the identification information from a non-providing position, in which the socket outlet is inaccessible in a housing of the charging station, the plug element is placed in a providing position in which the plug element is arranged in the housing so as to be accessible from the outside and a mating plug element can be inserted into the plug element,
**characterised in that** after the plug element is placed in the providing position additional identification information is transferred to a control unit of the charging station, by means of which the user's authorisation to perform the charging process is verified and/or a billing account assigned to the user is determined.

2. Method according to claim 1, **characterised in that** after the captured the identification information is stored at least temporarily in a data storage element assigned to the charging station.

3. Method according to claim 1 or 2, **characterised in that** identification information stored in the data storage element is deleted from the data storage element after passing of a predefined time interval and/or performance of a functionability test and/or successful completion of the charging process and/or when capturing identification information of a next user.

4. Method according to any one of claims 1 to 3, **characterised in that** the identification information is checked by reference to security features in order to establish it is genuine before the plug element is placed in the providing position.

5. Method according to any one of claims 1 to 4, **characterised in that** an information medium exhibiting identification information is inserted into a card reader which serves as an information capturing unit or is created on an externally accessible contact surface of the information capturing unit for the capture of the identification information.

6. Method according to any one of claims 1 to 5, **characterised in that** the identification information is captured by an identity document serving as an information medium and carried by a plurality of users.

7. Method according to any one of claims 1 to 6, **characterised in that** the identification information is captured by the information capturing unit optically and/or electrically and/or magnetically and/or contactlessly via a radio link.

## Revendications

1. Procédé de fourniture d'un accès à un élément d'enfichage, lequel est intégré dans une station de charge fournissant de l'énergie électrique à des véhicules pouvant fonctionner électriquement, dans lequel
- une information d'identification d'un utilisateur est saisie par une unité de saisie d'information associée à la station de charge et
- l'élément d'enfichage est, après la saisie de l'information d'identification, passé d'une position de non-fourniture, où la prise est agencée de manière inaccessible dans un boîtier de la station de charge, à une position de fourniture, où l'élément d'enfichage est agencé de manière accessible de l'extérieur dans le boîtier et un contre-élément d'enfichage est insérable dans l'élément d'enfichage,
**caractérisé en ce qu'**après la fourniture de l'élément d'enfichage dans la position de fourniture, une information d'identification supplémentaire est transmise à une unité de commande de la station de charge, au moyen de laquelle l'habilitation de l'utilisateur à mettre en œuvre l'opération de charge est vérifiée et/ou un compte de paiement associé à l'utilisateur est déterminé.

2. Procédé selon la revendication 1, **caractérisé en ce que** l'information d'identification est, après la saisie, mémorisée au moins temporairement dans un élément de mémoire de données associé à la station de charge.

3. Procédé selon la revendication 1 ou 2, **caractérisé en ce que** les informations d'identification mémorisées dans l'élément de mémoire de données sont effacées de l'élément de mémoire de données après écoulement d'un intervalle de temps prédéterminé et/ou après mise en oeuvre d'un contrôle de fonctionnalité et/ou après la clôture réussie de l'opération de charge et/ou lors de la saisie d'une information d'identification d'un utilisateur suivant.

4. Procédé selon l'une des revendications 1 à 3, **caractérisé en ce que** l'information d'identification est contrôlée en ce qui concerne son authenticité à l'aide de caractéristiques de sécurité, avant que l'élément d'enfichage ne soit passé dans la position de fourniture.

5. Procédé selon l'une des revendications 1 à 4, **caractérisé en ce que**, pour saisie de l'information d'identification, un support d'information comportant une information d'identification est introduit dans une unité lectrice de cartes servant comme unité de saisie d'information ou est posé sur une surface de contact de l'unité de saisie d'information accessible de l'extérieur.

6. Procédé selon l'une des revendications 1 à 5, **caractérisé en ce que** l'information d'identification est saisie depuis une pièce d'identité emportée par une pluralité d'utilisateurs, servant comme support d'information.

7. Procédé selon l'une des revendications 1 à 6, **caractérisé en ce que** les informations d'identification sont saisies par l'unité de saisie d'information de manière optique et/ou électrique et/ou magnétique et/ou sans contact par le biais d'une liaison radio.
